# EUROPEAN PATENT SPECIFICATION

(11) **EP 1 508 416 B1**
(45) Date of publication and mention of the grant of the patent: **10.09.2008**
(21) Application number: 03730511.7
(22) Date of filing: 19.05.2003
(51) Int. Cl.: B28B 11/02, C04B 33/30, B01D 39/20, F01N 3/02

(54) **METHOD OF MANUFACTURING HONEYCOMB STRUCTURAL BODY**
VERFAHREN ZUR HERSTELLUNG EINES WABENSTURKTURKÖRPERS
PROCEDE DE FABRICATION D'UN CORPS STRUCTUREL EN NID D'ABEILLES

(30) Priority: 20.05.2002 JP 2002144147
(43) Date of publication of application: 23.02.2005
(73) Proprietor: NGK INSULATORS, LTD., Nagoya-City, Aichi Pref. 467-8530 (JP)
(72) Inventor: KATO, Shigeki, c/o NGK INSULATORS, LTD., Nagoya-shi, Aichi 467-8530 (JP); MIYAMOTO, Mitsuru, c/o NGK INSULATORS, LTD., Nagoya-shi, Aichi 467-8530 (JP)
(74) Representative: Paget, Hugh Charles Edward
(86) International application number: PCT/JP2003/006201
(87) International publication number: WO 2003/097314

(56) References cited:
- JP-A- 2000 280 222
- JP-A- 2001 130 970
- US-A1- 2002 020 944

## Description

### Technical Field

The present invention relates to a process for producing a honeycomb structure wherein some of a large number of the cells are plugged, which is suitably used, for example, as a dust-collecting filter.

### Background Art

In recent years, ceramic honeycomb structures superior in heat resistance and corrosion resistance have been used as a dust-collecting filter for environmental management (e.g. pollution control), product recovery from high-temperature gas, etc. in various sectors including chemistry, electric power, steel and industrial waste treatment. Ceramic honeycomb structures (hereinafter referred to simply as "honeycomb structures" in some cases) are suitably used, for example, as a dust-collecting filter for use in a high-temperature, corrosive gas atmosphere such as a diesel particulate filter (DPF) for trapping particulates emitted from a diesel engine.

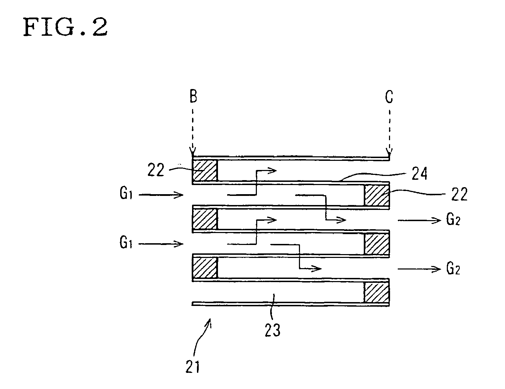

The honeycomb structure used as the above dust-collecting filter is required to have a constitution low in pressure loss and capable of giving a high trapping efficiency. Hence, honeycomb structures are in use in which some of a large number of the cells are plugged. In, for example, a honeycomb structure 21 such as shown in Fig. 2, wherein a large number of the cells 23 are alternately plugged at the inlet end face B and the outlet end face C by a plugged portion 22, a to-be-treated gas G₁ is allowed to enter unplugged cells 23 from the inlet end face B. The dust and particulates in the gas are captured by partition walls 24; meanwhile, the gas which has entered adjacent cells 23 through the porous partition walls 24, is discharged as a treated gas G₂ from the outlet end face C.

Such a honeycomb structure can be produced by masking some of cells, at an end face of a tubular ceramic honeycomb structure having a plurality of cells each functioning as a fluid passage, dipping the masked end face of the ceramic honeycomb structure in slurry containing a ceramic powder, a dispersion medium, etc., to force the slurry into the cells without masking to form plugged portions therein, and drying the plugged portions. This drying of the plugged portions have heretofore been conducted, for example, by hot-air drying using a hot-air oven, see e.g. JP-A-2001-130970.

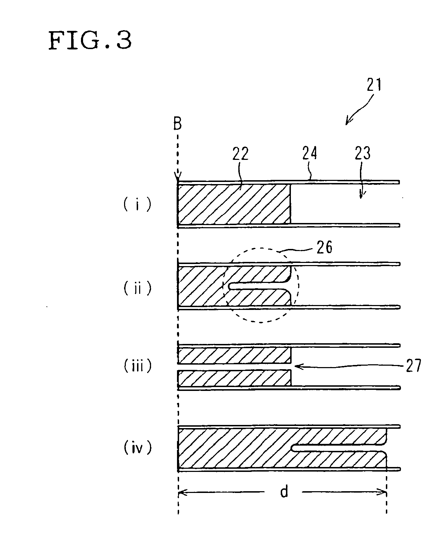

The honeycomb structure produced by the above process, however, has had a problem of yielding defect in the plugged portions. Fig. 3 is schematic enlarged sectional drawings of the vicinity of the inlet end face B of a honeycomb structure 21. Fig. 3(i) shows a plugged portion 22 to be formed satisfactorily. In this plugged portion 22, however, a shrunk dent 26 has generated as shown in Fig. 3(ii) and, in an extreme case, there has appeared a hole 27 passing through the plugged portion 22 as shown in Fig. 3(iii).

When the shrunk dent 26 generates, there is an inconvenience of the reduced reliability of the plugged portion 22; when there appears the hole 27 passing through the plugged portion 22, dust and particles leak through the hole 27, when it is used as a dust-collecting filter, it becomes impotent as a filter. Hence, this problem has heretofore been avoided by, as shown in Fig. 3(iv), forcing a ceramic slurry (for formation of plugged portion 22) excessively into the cell 23 to make larger the depth (d) of the plugged portion. When the depth (d) of the plugged portion is made larger, however, the surface area of the partition walls 24 separating the cells 22 from each other, that is, the area of filtration is reduced, which is not preferred.

### Disclosure of the Invention

The present invention has been made in view of the above-mentioned problems of the prior art and aims at providing a process for producing a honeycomb structure capable of effectively preventing a problem of generation of shrunk dents or holes passing through the plugged portions.

The present inventor made an intensive study in order to achieve the above aim. As a result, it was found that the above aim can be achieved by drying the plugged portions by a thermal conduction device and not by a conventional thermal convection device such as hot-air oven or the like. The present invention has been completed based on this finding. That is, the present invention provides the following process for producing a honeycomb structure.
(1) A process for producing a honeycomb structure, the process comprising: at an end face of a ceramic honeycomb structure having a plurality of cells each functioning as a passage of fluid, applying mask to some of the cells; dipping the end face of the ceramic honeycomb structure in slurry containing at least a ceramic powder, a dispersion medium and a binder, to force the slurry into cells without mask, to form plugged portions therein; and drying the plugged portions to obtain a honeycomb structure wherein the cells without mask are plugged, characterized in that the drying of the plugged portions is conducted by a thermal conduction device.
(2) A process for producing a honeycomb structure according to the above (1), wherein the thermal conduction device is an electric heating plate.
(3) A process for producing a honeycomb structure according to the above (1) or (2), wherein the mask has a thickness of 0.03 to 0.5 mm.
(4) A process for producing a honeycomb structure according to any of the above (1) to (3), wherein the binder contained in the slurry is a heat-gelling binder.
(5) A process for producing a honeycomb structure according to any of the above (1) to (4), wherein the slurry has a viscosity of 50 to 500 dPa·s.

### Brief Description of the Drawings

Fig. 1(a) and Fig. 1(b) are drawings showing steps of an embodiment of the present process for producing a honeycomb structure. Fig. 1(a) is a schematic drawing showing a step for forming plugged portions, and Fig. 1(b) is a schematic drawing showing a step for drying the plugged portions.
Fig. 2 is a schematic drawing showing the constitution of an ordinary honeycomb structure.
Fig. 3 is schematic enlarged sectional drawings of the vicinity of the inlet end face of a honeycomb structure.
Fig. 4 is schematic enlarged sectional drawings of the vicinity of the inlet end face of a honeycomb structure.

### Best Mode for Carrying Out the Invention

The mode for carrying out the present invention process for producing a honeycomb structure is specifically described below referring to the accompanying drawings.

In developing the present invention process for producing a honeycomb structure, the present inventor first investigated the reason why shrunk dents in plugged portions or holes passing through plugged portions are generated. As a result, it was found that when the plugged portions are dried by a conventional thermal convection device such as hot-air oven or the like, shrunk dents in the plugged portions or holes passing through the plugged portions generate, owing to the low drying speed of the thermal convection device.

Specifically explaining, when the plugged portions are dried by a thermal convection device such as hot-air oven or the like, drying (evaporation of the water in the slurry constituting plugged portions) takes place slowly starting from the outer side of each plugged portion, i.e. the end face side of honeycomb structure owing to the relatively low drying speed of the thermal convection device. This is accompanied by slow movement of the water in the slurry from inner side of each plugged portion to the outer side, i.e. the end face side of honeycomb structure. In this case, those ceramic particles in the slurry, contacting with each cell inner wall stay there owing to an anchor effect; meanwhile, those particles not contacting with the cell inner wall move slowly, together with the water in the slurry, from inner side of each plugged portion to the outer side, i.e. the end face side of honeycomb structure. By this phenomenon, shrunk dents in the plugged portions or holes passing through the plugged portion generate.

As above, generation of shrunk dents in plugged portions or holes passing through plugged portions is attributed to the low drying speed of plugged portions. Such a phenomenon is considered to be preventable by increasing the drying speed.

Hence, in the present invention, drying of plugged portions was conducted by a thermal conduction device and not by a conventional thermal convection device such as hot-air oven or the like. Thereby, a higher drying speed is obtained and drying (evaporation of the water in the slurry constituting each plugged portion) takes place instantly in the whole plugged portion; as a result, there does not take place the phenomenon that the water in the slurry moves slowly in each plugged portion from its inner side to the outer side, i.e. the end face side of honeycomb structure. Therefore, there does not take place the phenomenon that those ceramic particles not contacting with each cell inner wall move slowly, together with the water in the slurry, from inner side of each plugged portion to the outer side, i.e. the end face side of honeycomb structure. Consequently, the generation of shrunk dents in plugged portions or holes passing through plugged portions can be prevented effectively.

In the present process, since generation of shrunk dents or the like can be prevented, it is also possible to make as small as about 1 to 5 mm the depth of plugging which has heretofore been as large as about 10 mm (this is larger than necessary). Therefore, plugging of cells can be conducted effectively without decreasing the surface area of partition walls separating the cells from each other, i.e. the filtration area of filter.

The ceramic honeycomb structure produced by the present process is a ceramic honeycomb structure having a plurality of cells each functioning as a passage of a fluid. There is no particular restriction as to the material thereof as long as it is a ceramic. There can be mentioned, for example, one comprising cordierite. There is no particular restriction as to the process for producing the ceramic honeycomb structure. There can be suitably used, for example, a process which comprises subjecting puddle of appropriately controlled viscosity to extrusion molding using an extrusion die having a desired cell shape, partition wall thickness and cell density, and drying the resulting extrudate.

In the production process of the present invention, first, some of the cells of the ceramic honeycomb structure (hereinafter, this ceramic honeycomb structure is sometimes referred to simply as "honeycomb structure") are masked at an end face of the structure.

There is no particular restriction as to the process for masking. There can be mentioned, for example, a method of attaching an adhesive film to the whole area of an end face of the honeycomb structure and making holes partially in the adhesive film. Specifically, there can be suitably used, for example, a method of attaching an adhesive film to the whole area of an end face of the honeycomb structure and then making holes, by a laser, only in those areas of the film corresponding to the cells in which plugged portions need be formed.

The thickness of the mask used is preferably 0.03 to 0.5 mm. When the thickness of the mask is too large, the distance between each plugged portion to be formed and the thermal conduction device (e.g. electric heating plate) used is large and a gap may be present between them; therefore, the speed of thermal conduction is small and shrunk dents generate easily. Meanwhile, when the thickness of the mask is too small, the strength of the mask is low; as a result, the operation of attaching the mask to the end face of the honeycomb structure is difficult, resulting in reduced workability. As the adhesive film, there can be suitably used, for example, one obtained by coating an adhesive to one side of a polyethylene-made film. A commercial adhesive film having the above-mentioned thickness range can be selected appropriately. It is possible to laminate a commercial self-adhesive film in a plurality of layers so as to have a desired thickness.

Next, the masked end face of the honeycomb structure is dipped in slurry containing at least a ceramic powder, a dispersion medium and a binder, to force the slurry into the residual cells to form plugged portions.

For example, the honeycomb structure is forced, with its masked end face directed downward, into a stuffing vessel containing the slurry, with an appropriate pressure, whereby the masked end face of the honeycomb structure is dipped in the slurry.

The slurry can be produced by mixing at least a ceramic powder, a dispersion medium (e.g. water) and a binder. Also, additives such as deflocculant and the like may be added as necessary. As to the material for the ceramic powder, there is no particular restriction and, for example, cordierite can be suitably used. As the binder, a resin such as polyvinyl alcohol (hereinafter referred to as "PVA") can be used. However, use of a heat-gelling binder which gelates when heated, is preferred. The heat-gelling binder gelates when heated and retrains the particles of the ceramic powder; therefore, this enables evaporation of only the water present in the slurry and generation of shrunk dents can be prevented effectively. As the heat-gelling binder, methyl cellulose can be suitably used.

Incidentally, the viscosity of the slurry is preferably 50 to 500 dPa·s, more preferably 50 to 200 dPa·s. When the viscosity of the slurry is too small, the ceramic particles move easily and shrunk dents generate easily, which is not preferred. Meanwhile, when the viscosity of the slurry is too high, the flow resistance of the slurry against cell wall is high and the difference in stuffing speed of slurry between the cell wall vicinity and the cell center is large. Specifically explaining, the depth of plugging is shorter at the cell wall vicinity than at the cell center and the area of contact between the honeycomb structure and the plugging material becomes smaller, which is not preferred. The viscosity of the slurry can be controlled by, for example, the ratio of the ceramic powder and the dispersion medium (e.g. water) or the amount of the deflocculant used.

Lastly, the plugged portions are dried by a thermal conduction device, whereby is obtained a honeycomb structure wherein the residual cells are plugged.

"Drying by a thermal conduction device" does not mean drying by a conventional thermal convection device (e.g. hot-air oven), that is, drying using a flow of a heat medium such as hot air or the like, but drying device by contacting plugged portions directly with a thermal conduction device such as heater or the like. As the thermal conduction device, there can be suitably used, for example, an electric heating plate. By drying with a thermal conduction device, the speed of drying is increased and the whole plugged portions are instantly heated (the water in the slurry constituting the plugged portions is evaporated); therefore, generation of shrunk dents in plugged portions or holes passing through plugged portions can be prevented effectively.

The honeycomb structure wherein, as described above, the plugged portions have been dried and the residual cells have been plugged, is fired ordinarily at about 1,430°C for about 5 hours in the case of, for example, cordierite, whereby a final product is obtained.

The present invention is described more specifically below by way of Examples. However, the present invention is in no way restricted by these Examples.

The honeycomb structure used in the present Examples was one made of cordierite and having a cylindrical shape of 160 mm in outer diameter and 200 mm in length. The cell configuration was such that the cell shape was tetragonal, the partition wall thickness was 300 µm and the cell density was 300 per square inch. This honeycomb structure was produced by subjecting puddle having an appropriately controlled viscosity to extrusion molding using an extrusion die having the above-mentioned cell shape, partition wall thickness and cell density, drying the resulting extrudate, cutting the dried extrudate at both end faces to make them flat.

First, some of the cells of the honeycomb structure were masked at an end face. As the masking method, there was used a method of attaching an adhesive film to the whole area of the end face of the honeycomb structure and then making holes, by a laser, in the film areas corresponding to the cells in which plugged portions need be formed. As the adhesive film, there was used a commercial adhesive film (a film obtained by coating an adhesive on one side of a polyethylene film).

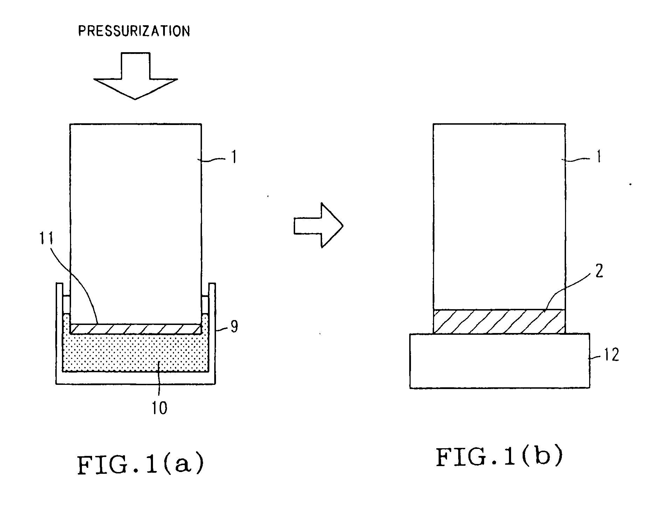

The masked end face of the honeycomb structure was dipped in slurry to force the slurry into the residual cells to form plugged portions therein. Specifically, as shown in Fig. 1(a), 50 g of slurry 10 was placed in a stuffing vessel 9 in a depth of 5 mm (this depth corresponded to the depth of plugging) so as to give a smooth slurry surface; into the resulting vessel 9 was forced the honeycomb structure 1 with the masked end face (by mask 11) being downward (the structure was set vertically relative to the slurry surface) while a pressure of 2 kg/cm² was being applied; thereby, the masked end face (by mask 11) of the honeycomb structure 1 was dipped in the slurry 10. Lastly, the plugged portions formed were dried to obtain a honeycomb structure. In the following Examples and Comparative Example, the conditions used in the above production process, i.e. the thickness of the adhesive film used as a mask, the viscosity of the slurry, the device for drying and the drying method were varied appropriately to examine the effects thereof.

### (Comparative Example 1)

As the masking method, there was used a method of using an adhesive film. The thickness of the adhesive film used was 0.05 mm. As the slurry used for plugging, there was used slurry produced by mixing a cordierite powder as a ceramic powder, methyl cellulose as a heat-gelling binder, and a high-molecular surfactant of particular carboxylic acid type (Trade name: Poise 530, a product of Kao Corporation) as a deflocculant, at a ratio shown in Table 1, adding thereto water as a dispersion medium, and mixing the resulting material for 30 minutes. The slurry was set for the viscosity of 90 dPa·s. As the drying device, a hot-air oven was used, and drying was conducted at a set temperature of 250°C for 5 minutes.

**Table 1**

| | Thickness of adhesive film used as mask (mm) | Mixing ratio of slurry | | | | Slurry viscosity (dPa·s) | Drying device | Condition after drying |
|---|---|---|---|---|---|---|---|---|
| | | Cordierite (mass parts) | Binder | | Deflocculant | | | |
| | | | | (mass parts) | (mass parts) | | | |
| Comparative Example 1 | 0.05 | 100 | Methyl cellulose | 0.3 | 0.4 | 90 | Hot-air oven | D-X |
| Example 1 | 0.05 | 100 | Methyl cellulose | 0.3 | 0.4 | 90 | Electric heating plate | A-⊚ |
| Example 2 | 0.5 | 100 | Methyl cellulose | 0.3 | 0.4 | 90 | Electric heating plate | A-⊚ |
| Example 3 | 1 | 100 | Methyl cellulose | 0.3 | 0.4 | 90 | Electric heating plate | B-○ |
| Example 4 | 0.05 | 100 | Methyl cellulose | 0.3 | 0.4 | 20 | Electric heating plate | B-○ |
| Example 5 | 0.05 | 100 | Methyl cellulose | 0.3 | 0.4 | 50 | Electric heating plate | B-○ |
| Example 6 | 0.05 | 100 | Methyl cellulose | 0.3 | 0.4 | 200 | Electric heating plate | A-⊚ |
| Example 7 | 0.05 | 100 | Methyl cellulose | 0.3 | 0.4 | 500 | Electric heating plate | A-⊚ |
| Example 8 | 0.05 | 100 | Methyl cellulose | 0.3 | 0.4 | 2000 | Electric heating plate | C-○ |
| Example 9 | 0.05 | 100 | PVA | 0.3 (as solid content) | 0.4 | 100 | Electric heating plate | C-○ |

### (Example 1)

As the masking method, there was used a method of using an adhesive film. The thickness of the adhesive film and the slurry used for plugging were the same as in Comparative Example 1. As shown in Fig. 1(b), a thermal conduction device 12 (an electric heating plate) was used as the drying device, and drying was conducted for 5 minutes by contacting each plugged portion 2 of a honeycomb structure 1 directly with the thermal conduction device 12 (an electric heating plate) set at 250°C.

### (Examples 2 and 3)

As the masking method, there was used a method of using an adhesive film. As the adhesive film, one having a thickness of 0.5 mm was used. In Example 2, one sheet of the film was used in a thickness of 0.5 mm and, in Example 3, two sheets of the film were laminated in a total thickness of 1 mm. The slurry used for plugging, the drying device, and the drying method were the same as in Example 1.

### (Examples 4 to 8)

As the masking method, there was used a method of using an adhesive film. The thickness of the adhesive film, the drying device, and the drying method were the same as in Example 1. As the slurry used for plugging, there were used those produced by mixing a cordierite powder as a ceramic powder, methyl cellulose as a heat-gelling binder, and a high-molecular surfactant of particular carboxylic acid type (Trade name: Poise 530, a product of Kao Corporation) as a deflocculant, at ratios shown in Table 1, adding thereto water as a dispersion medium for viscosity adjustment to an appropriate level, and mixing the resulting material for 30 minutes. The slurry were set for the viscosity of 20 dPa·s (Example 4), 50 dPa·s (Example 5), 200 dPa·s (Example 6), 500 dPa·s (Example 7) and 2,000 dPa·s (Example 8).

### (Example 9)

As the masking method, there was used a method of using an adhesive film. The thickness of the adhesive film, the drying device, and the drying method were the same as in Example 1. As the slurry used for plugging, there was used slurry produced in the same manner as in Example 1 except that PVA was used as the binder, in place of methyl cellulose. The slurry was set for the viscosity of 100 dPa·s.

### (Evaluation)

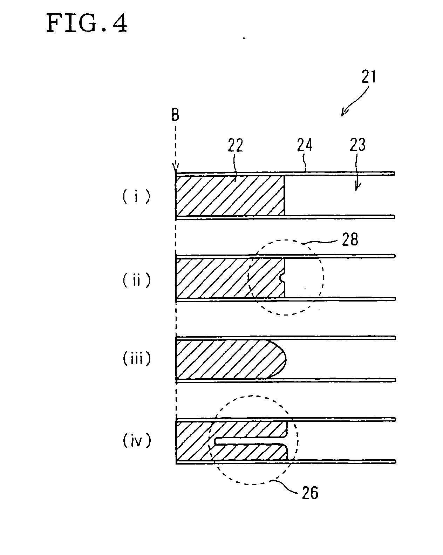

After the completion of drying, the conditions of plugged portions were observed for evaluation. The results are shown in Table 1. Fig. 4 is schematic enlarged sectional drawings of the vicinity of the inlet side end face B of a honeycomb structure 21. A condition of no generation of shrunk dent, shown in Fig. 4(i) was expressed as A; a condition of generation of small shrunk dent 28 but no practical problem, shown in Fig. 4(ii) was expressed as B; a condition of no generation of shrunk dent but rounded end of plugged portion 22 (resulting in reduced area of contact with cell 23), shown in Fig. 4(iii) was expressed as C; and a condition of generation of shrunk dent 26, shown in Fig. 4(iv) was expressed as D. Also, a very good condition was expressed as ⊚; a good condition was expressed as ○; and an inferior condition was expressed as X.

### (Results)

As shown in Table 1, with the production processes of Examples 1 to 9, generation of shrunk dents in plugged portions or holes passing through plugged portions could be prevented effectively. Meanwhile, with the production process of Comparative Example 1, shrunk dents generated in plugged portions and the condition of plugged portions was inferior.

### Industrial Applicability

As described above, in the present process for producing a honeycomb structure, since plugged portions are dried by a thermal conduction device, generation of shrunk dents in plugged portions or holes passing through plugged portions can be prevented effectively.

## Claims

1. A process for producing a honeycomb structure, the process comprising:
at an end face of a ceramic honeycomb structure (1,21) having a plurality of cells (23) each functioning as a passage of fluid, applying mask (11) to some of the cells (23);
dipping the end face of the ceramic honeycomb structure in slurry (10) containing at least a ceramic powder, a dispersion medium and a binder, to force the slurry into cells (23) without mask (11), to form plugged portions (22) therein; and
drying the plugged portions (22) to obtain a honeycomb structure (1,21) wherein the cells (23) without mask (11) are plugged;
**characterized in that** the drying of the plugged portions (22) is conducted by a thermal conduction device (12).

2. A process for producing a honeycomb structure according to Claim 1, wherein the thermal conduction device (12) is an electric heating plate.

3. A process for producing a honeycomb structure according to Claim 1 or 2, wherein the mask (11) has a thickness of 0.03 to 0.5 mm.

4. A process for producing a honeycomb structure according to any of Claims 1 to 3, wherein the binder contained in the slurry (10) is a heat-gelling binder.

5. A process for producing a honeycomb structure according to any of Claims 1 to 4, wherein the slurry (10) has a viscosity of 50 to 500 dPa·s.

## Patentansprüche

1. Verfahren zur Herstellung einer Wabenstruktur, wobei das Verfahren Folgendes umfasst:
das Aufbringen einer Abdeckung (11) auf einigen Zellen (23) an einer Endfläche einer Keramikwabenstruktur (1, 21) mit einer Vielzahl von Zellen (23), die jeweils als Flüssigkeitsdurchlass dienen;
das Eintauchen der Endfläche der Keramikwabenstruktur in eine Aufschlämmung (10), die zumindest ein Keramikpulver, ein Dispersionsmedium und ein Bindemittel enthält, um die Aufschlämmung in die Zellen (23) ohne Abdeckung (11) zu drücken, um verschlossene Abschnitte (22) darin zu bilden; und
das Trocknen der verschlossenen Abschnitte (22), um eine Wabenstruktur (1, 21) zu erhalten, worin die Zellen (23) ohne Abdeckung (11) verschlossen sind;
**dadurch gekennzeichnet, dass** das Trocknen der verschlossenen Abschnitte (22) durch eine Wärmeleitungsvorrichtung (12) erfolgt.

2. Verfahren zur Herstellung einer Wabenstruktur nach Anspruch 1, worin die Wärmeleitungsvorrichtung (12) eine elektrische Heizplatte ist.

3. Verfahren zur Herstellung einer Wabenstruktur nach Anspruch 1 oder 2, worin die Abdeckung (11) eine Dicke von 0,03 bis 0,5 mm aufweist.

4. Verfahren zur Herstellung einer Wabenstruktur nach einem der Ansprüche 1 bis 3, worin das in der Aufschlämmung (10) enthaltene Bindemittel ein durch Wärme in den Gelzustand übergehendes Bindemittel ist.

5. Verfahren zur Herstellung einer Wabenstruktur nach einem der Ansprüche 1 bis 4, worin die Aufschlämmung (10) eine Viskosität von 50 bis 500 dPa·s aufweist.

## Revendications

1. Procédé de production d'une structure en nid d'abeilles, le procédé comprenant les étapes qui consistent à :
appliquer un masque (11) sur certaines des cellules (23) situées sur une face extrémité d'une structure (1, 21) céramique en nid d'abeilles qui présente plusieurs cellules (23), chacune jouant le rôle d'un passage de fluide,
tremper la face d'extrémité de la structure céramique en nid d'abeilles dans une boue (10) qui contient au moins une poudre céramique, un fluide de dispersion et un liant, pour obliger la boue à passer dans les cellules (23) dépourvue de masque (11), pour y former des parties bouchées (22) et
sécher les parties bouchées (22) pour obtenir une structure (1, 21) en nid d'abeilles dont les cellules (23) sans masque (11) sont bouchées,
**caractérisé en ce que** le séchage des parties bouchées (22) est réalisé à l'aide d'un dispositif à conduction thermique (12).

2. Procédé pour produire une structure en nid d'abeilles selon la revendication 1, dans lequel le dispositif de conduction thermique (12) est une plaque électrique chauffante.

3. Procédé pour produire une structure en nid d'abeilles selon les revendications 1 ou 2, dans lequel le masque (11) a une épaisseur comprise entre 0,03 et 0,5 mm.

4. Procédé pour produire une structure en nid d'abeilles selon l'une quelconque des revendications 1 à 3, dans lequel le liant contenu dans la boue (10) est un liant qui se gélifie à chaud.

5. Procédé pour produire une structure en nid d'abeilles selon l'une quelconque des revendications 1 à 4, dans lequel la boue (10) a une viscosité comprise entre 50 et 500 dPa.s.
